## Europäisches Patentamt
## European Patent Office
## Office européen des brevets

(19)

(11) Veröffentlichungsnummer: **0 075 567**
**B1**

(12)

# EUROPÄISCHE PATENTSCHRIFT

(45) Veröffentlichungstag der Patentschrift:
**11.06.86**

(51) Int. Cl.⁴: **G 01 B 11/16**, G 01 L 1/24, G 02 B 6/04

(21) Anmeldenummer: **82900935.6**

(22) Anmeldetag: **24.03.82**

(86) Internationale Anmeldenummer:
**PCT/DE 82/00069**

(87) Internationale Veröffentlichungsnummer:
**WO 82/03454 (14.10.82 Gazette 82/25)**

(54) **VERFAHREN ZUR HERSTELLUNG EINER MESSANORDNUNG ZUM FESTSTELLEN VON RISSEN.**

(30) Priorität: **26.03.81 DE 3111858**
**26.10.81 DE 3142392**
**25.02.82 DE 3206656**

(43) Veröffentlichungstag der Anmeldung:
**06.04.83 Patentblatt 83/14**

(45) Bekanntmachung des Hinweises auf die Patenterteilung:
**11.06.86 Patentblatt 86/24**

(84) Benannte Vertragsstaaten:
**FR GB SE**

(56) Entgegenhaltungen:
DE - A - 1 572 857
DE - A - 2 902 259
GB - A - 1 570 511
US - A - 3 937 559
US - A - 4 270 049

*Navy Technical Disclosure Bulletin, vol. 4, no. 5, May 1979, Washington (US), A.S. Glista, "Composite structure diagnostics via optical waveguides", pages 71-73
Strain, vol. 16, no. 4, October 1980, Edinburgh (GB), K.F. Hale u.a., "The application of optical fibres as witness devices for detection of plastic strain and cracking", pages 150-154*

(73) Patentinhaber: **Messerschmitt-Bölkow-Blohm Gesellschaft mit beschränkter Haftung, Robert-Koch-Strasse, D-8012 Ottobrunn (DE)**

(72) Erfinder: **MALEK, Samir, Auf der Koppel 40, D-2822 Schwanewede-Leuchtenburg (DE)**
Erfinder: **HOFER, Bernd, Osnabrücker Strasse 11, D-2874 Lemwerder (DE)**

(74) Vertreter: **Schramm, Ewald Werner Josef, Messerschmitt-Bölkow-Blohm GmbH Patentabteilung TW63 (TWB32) Postfach 10 78 45, D-2800 Bremen 1 (DE)**

(56) Entgegenhaltungen: (Fortsetzung)
**IBM Technical Disclosure Bulletin", vol. 24, no. 2, July 1981, New York, (US), H. Korth "Integrated optical force and stress sensor", pages 893-894**

## Beschreibung

Die Erfindung bezieht sich auf ein Verfahren zur Herstellung einer Meßanordnung zum Feststellen von Rissen in Prüflingen mit einem zur Auslösung einer Rißanzeige dienenden am Prüfling angebrachten Rißdetektor, der aus auf den Prüfling aufgeklebten und mit Licht versorgten Lichtleitfasern besteht.

Eine Meßanordnung der genannten Art wurde zum Beispiel aus "Strain, Vol 16, Oct 1980, Seiten 150-154" bekannt. Der Rißdetektor besteht dort aus Lichtleitfasern, welche auf den jeweils zu untersuchenden Prüfling aufgeklebt werden. Mittels eines Lichteinkopplers wird diesen Lichtleitfasern Licht zugeführt, deren Transmission an den anderen Enden mit einem Lichtdetektor überwacht wird. Ein in einer Lichtleitfaser aufgrund eines Risses entstandener Bruch reduziert die Lichttransmission in dieser Faser sehr stark und hat daher zur Folge, daß der Lichtdetektor hierauf anspricht und ein Signal zur Auslösung einer Rißanzeige erzeugt. Von besonderem Vorteil ist dabei die Tatsache, daß durch den unmittelbaren Kontakt der Lichtleitfaser mit der Bauteiloberfläche sich eine hohe Nachweisempfindlichkeit ergibt und daß Korrosionprobleme nicht auftreten können.

Außerdem ist eine einmal ausgelöste Rißanzeige irreversibel, so daß ein Riß auch nach Entlastung weiterhin angezeigt wird. Problematisch ist jedoch das Aufkleben der Lichtleitfasern auf die Bauteile, da ein definiertes Verlegen der Lichtleitfasern Voraussetzung für die Güte eines Meßvorganges ist. Aus der US-A 39 37 559 ist es zwar bekannt Lichtleitfasern zwischen zwei thermoplastische Filme zu verlegen und aus solchen Faserbändern Lichtleiterkabel herzustellen. Die Lichtleiter werden dazu wellig zwischen den Filmen eingebettet, um Dehnungen und Brüche der Fasern bei Kabelbelastungen zu verhindern.

Der vorliegenden Erfindung liegt die Aufgabe zugrunde ein Verfahren vorzusehen, welches das Anbringen der Lichtleitfasern auf den Prüfling in definieiter Konfiguration auf einfache und sichere Weise gestattet. Gemäß der Erfindung ist diese Aufgabe dadurch gelöst, daß die Lichtleitfasern auf der Haftseite einer flächenmäßig perforierten Klebefolie verlegt und nach dem Aufkleben der Klebefolie auf den Prüfling an den durch die Perforierung freien Stellen mit einer ersten Lackschicht überzogen werden, und daß die an dem Prüfling haftenden Lichtleitfasern nach Aushärten der Lackschicht und Abziehen der Klebefolie mit einer zweiten Lackschicht/oder weiteren Lackschichten überzogen werden.

Das erfindungsgemäße Verfahren ermöglicht ein Anbringen der Lichtleitfasern in definierter Konfiguration ohne großen und zeitraubenden Aufwand. Für den Lack kann dabei Zink-Chromat-Lack benutzt werden, während für die Klebefolie eine dehnbare Folie aus einem gegen Lackverdünnungsmittel resistenten Werkstoff zu benutzen ist. Für das Verlegen der Lichtleitfasern auf der Haftseiete einer Klebefolie können Vorrichtungen benutzt werden, welche z.B. ein Verlegen in Längsrichtung eines Klebefolienbandes oder mäanderförmig Ermöglichen. Zum Verlegen von bestimmten Sonderformen empfiehlt es sich Schablonen zu benutzen, die sich aufgrund einer Antihaftschicht nach dem Verlegen leicht von der Klebefolie entfernen lassen. Es ist aber auch möglich hierfür einen Führungskopf zu benutzen und diesen nach Art eines X-Y-Schreibers mit einer Mikroprozessorsteuerung zu steuern.

Die Erfindung wird anhand der beiliegenden Zeichnung näher erläutert. Es zeigen:

Fig. 1 ein perforiertes Klebefolienband,

Fig. 2 eine Vorrichtung zum Verlegen von Lichtleitfasern auf einem Klebefolienband,

Fig. 2a ein mit Lichtleitfasern versehenes Klebefolienband,

Fig. 3 ein Klebefolienband mit mäanderförmig verlegten Lichtleitfasern und

Fig. 4 zwei Schablonen zum Verlegen von Lichtleitfasern in Sonderform.

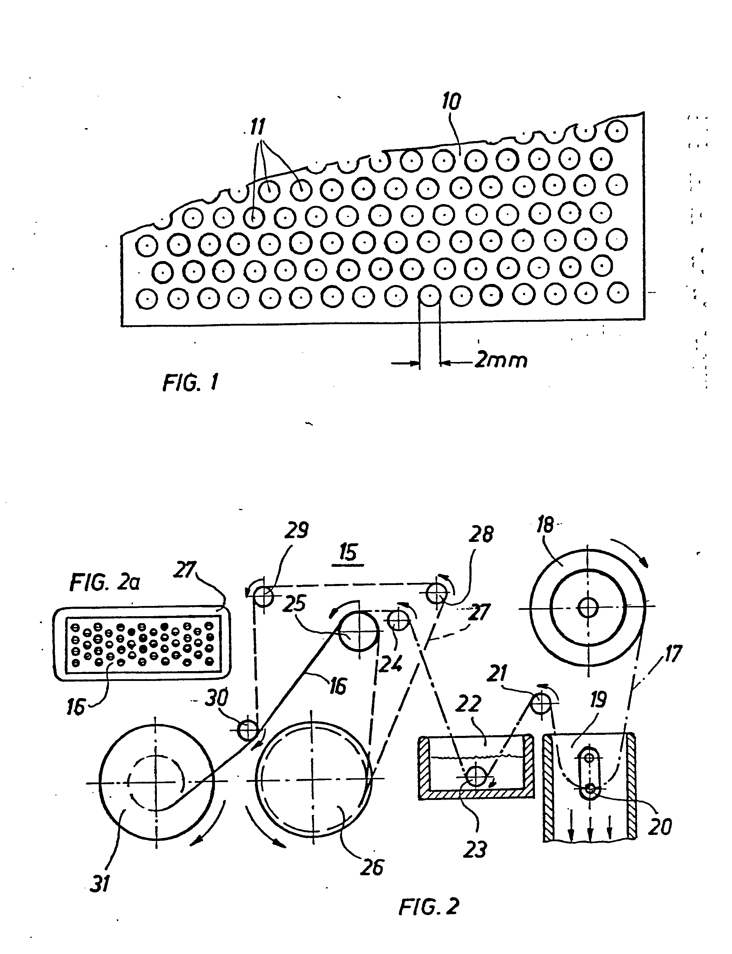

In der Darstellung nach Fig. 1 ist eine Klebefolie 10 als Ausschnitt eines Bandes zu sehen, das mit einer flächenmäßig verteilten Perforierung 11 versehen ist. Das Ausführungsbeispiel ist für Lochdurchmesser von 2 mm mit entsprechend bemessenen Zwischenstücken ausgelegt. Fig. 2 zeigt eine Vorrichtung 15, welche es gestattet auf der Haftseite eines Klebefolienbandes 16 Lichtleitfasern 17 in Längsrichtung maschinell zu verlegen. Die Lichtleitfasern 17 werden dabei von einer Vorratsrolle 18 abgerollt, und zunächst über eine in einem Saugrohr 19 angeordnete Umlenkrolle 20 geleitet. Dies Saugrohr 19 dient zum Spannen der Lichtleitfasern 17, während die Umlenkrolle 20 mit Hilfe einer nicht näher dargestellten optischen Positionsmessung gleichzeitig zur Regelung des Faservorschubes dient. Nach dem Saugrohr 19 werden die Lichtleitfasern 17 über eine Umlenkrolle 21 in ein Reinigungsbad 22 zum Entfernen der Schlichte geleitet und über eine im Bad angeordnete weitere Umlenkrolle 23 wieder herausgeleitet. Über eine Umlenkrolle 24 gelangen die gereinigten Lichtleitfasern 17 zu einer Umlenkrolle 25, der das perforierte Klebefolienband 16 von einer Vorratsrolle 26 ebenfalls zugeleitet ist. Von der Klebefolie 16 wird das Trennpapier 27 zuvor abgetrennt und über zwei Umlenkrollen 28, 29 einer Umlenkrolle 30 zugeführt. An dieser Rolle wird das mit den Lichtleitfasern 17 versehene Klebefolienband 16 wieder mit dem Trennpapier 27 versehen und einer Vorratsrolle 31 zum Aufspulen zugeleitet. Die Vorratsrolle 31 enthält somit ein mit Lichtleitfasern 17 versehenes und durch das Trennpapier 27 abgedecktes Klebefolienband 16, das quasi als Meterware für Meßzwecke zugeschnitten werden kann. An einer der Umlenkrollen, vorzugsweise der Umlenkrolle 24 sind dabei Führungselemente, beispielsweise Rillen vorgesehen, welche eine definierte Verlegung der Lichtleitfasern 17 gewährleisten.

In der Darstellung Fig. 2 a ist dabei ein mit Lichtleitfasern 17 versehenes Klebefolienband 16 zu sehen und zu erkennen, daß durch die flächenmäßige Perforierung die Lichtleitfasern 17 in gleichmäßig verteilten Abständen frei liegen. Nach dem Aufkleben auf einen Prüfling sind die Lichtleitfasern 17 im Bereich der Perforationslöcher frei und können durch Auftragen (Spritzen) einer ersten Lackschicht am Prüfling befestigt werden. Nach dem Aushärten der Lackschicht und Abziehen der Folie kann durch Auftragen einer zweiten Lackschiht/ oder weiterer Lackschichten eine Verlegung der Lichtleitfasern mit sicherer Haftung erzielt werden. Für den Lack wird vorzugsweise Zink-Chromat - Lack verwendet, wobei als Verdünnungsmittel ein die Folie nicht angreifendes Mittel bzw. eine gegen das Verdünnungsmittel resistente Folie benutzt wird.

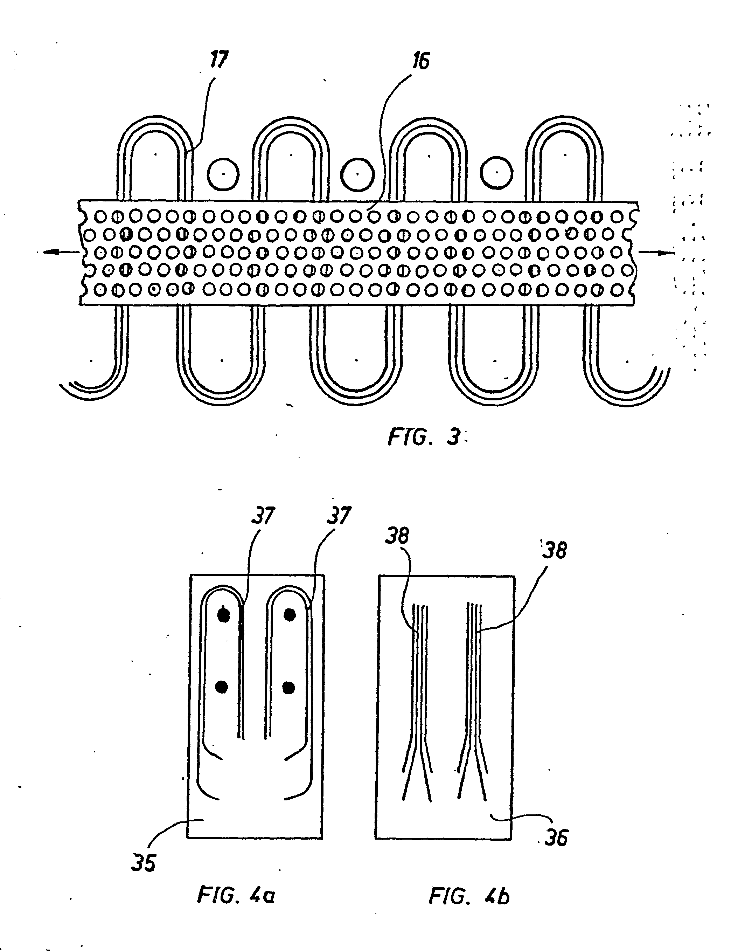

Neben einer Verlegung der Lichtleitfasern (17) in Längsrichtung eines Klebefolienbandes (16) ist auch eine mäanderförmige Verlegung z. B. nach Fig. 3 möglich. Eine derartige Verlegung verlangt Zusatzvorrichtungen z. B. Schablonen, was aber ohne großen Aufwand möglich ist. Bei dem Klebefolienband 16 nach Fig. 3 sind die Lichtleitfasern 17 mit über die Ränder hinausreichenden Schleifen verlegt. Eine solche Verlegungsart hat aufgrund der dehnbaren Folie den Vorteil, daß sich z. B. beim Anbringen an einen Prüfling hiermit die in der Praxis auftretenden Unregelmäßigkeiten von Nietlochabständen ausgleichen lassen.

Zum Verlegen der Lichtleitfasern 17 in beliebigen Sonderformen können auch Schablonen benutzt werden. Fig. 4 a und 4 b zeigen hier zwei Schablonen 35, 36, welche aus dünnen Edelstahlblechen bestehen und durchgeätzte Bahnen 37, 38 für die Lichtleitfasern 17 besitzen. Diese Schablonen 35,36 sind darüber hinaus mit einer Antihaftschicht versehen, welche nach dem Verlegen auf eine Klebefolie 10 ein leichtes Abnehmen gewährleistet. Neben einem Verlegen mit Hilfe von Schablonen ist auch eine maschinelle Verle-gung in beliebiger Konfiguration möglich. Hierfür kann z. B. ein Führungskopf benutzt werden, welcher nach Art eines X- Y - Schreibers mit Hilfe einer Mikroprozessersteuerung eine beliebig vorgebbare Sonderform abzulegen erlaubt. Die erfindungsgemäße Lösung ermöglicht daher Lichtleitfasern in beliebiger Konfiguration auf der Haftseite von Klebefolien zu verlegen und diese dann in der beschriebenen Weise an einen Prüfling zum Feststellen von Rissen anzubringen.

**Patentansprüche:**

1. Verfahren zur Herstellung einer Meßanordnung zum Feststellen von Rissen in Prüflingen mit einem zum Auslösen einer Rißanzeige dienenden, an den prüfling angebrachten Rißdetektor, der aus auf den Prüfling aufgeklebten und mit Licht versorgten Lichtleitfasern besteht, dadurch gekennzeichnet, daß die Lichtleitfasern (17) auf der Haftseite einer flächenmäßig perforierten Klebefolie (10, 16) verlegt und nach dem Aufkleben der Klebefolie auf den Prüfling an den durch die Perforierung freien Stellen mit einer ersten Lackschicht überzogen werden, und daß die an dem prüfling haftenden Lichtleitfasern (17) nach Aushärten der Lackschicht und Abziehen der Klebefolie (10, 16) mit einer zweiten Lackschicht oder weiteren Lackschichten überzogen werden.

2. Verfahren nach Anspruch 1, dadurch gekennzeichnet, daß für die Lackschichten Zink-Chromat-Lack verwendet wird, und daß diese Lackschichten zum Auftragen (Spritzen) mit definiertem Verdünnungsmittel angereichert werden.

3. Verfahren nach Anspruch 1 oder 2, dadurch gekennzeichnet, daß für die Klebefolie (10, 16) ein Stoff verwendet wird, der dehnbar und gegen das Verdünnungsmittel resistent ist.

4. Verfahren nach einem der Ansprüche 1 bis 3, dadurch gekennzeichnet, daß die Lichtleitfasern (17) auf einem Klebefolienband (16) mäanderförmig mit über die Ränder des Klebefolien bandes hinausreichenden Schleifen verlegt werden.

5. Verfahren nach einem der Ansprüche 1 bis 3, dadurch gekennzeichnet, daß die Lichtleitfasern (17) mit Hilfe einer Schablone (35, 36) auf der Klebefolie (10) verlegt werden, und daß die mit einer Antihaftschicht versehene Schablone nach dem Verlegen der Lichtleitfasern leicht von der Klebefolie (10) abgenommen wird.

6. Verfahren nach einem der vorhergehenden Ansprüche, dadurch gekennzeichnet, daß zur Verlegung des Lichtleitfasern (17) auf des Klebefolie (10) ein Führungskopf verwendet wird, der nach Art eines X-Y-Schreibers in Abhängigkeit einer Mikroprozessorsteuerung die Lichtleitfasern (17) in beliebiger vorgebbarer Konfiguration ablegt.

**Claims**

1. Method for the manufacture of a measurement arrangement for the detection of flaws in specimens with a flaw detector which serves to actuate a flaw indicator, is mounted on the specimen, and comprises optical fibres adhered to the specimen, characterised in that the optical fibres (17) are laid on the adhesive side of a substantially flat perforated adhesive sheet (10, 16) and, after the adhesion of the adhesive sheet to the specimen, are coated with a first layer of lacquer at the positions made accessible by the perforation, and that the optical fibres (17) adhered to the specimen, after hardening of the layer of lacquer and removal of the adhesive sheet (10, 16), are coated with a second layer of lacquer or further layers of lacquer.

2. Method according to Claim 1, characterised in that as the layers of lacquers there is employed zinc chromate lacquer, and that for application (spraying) these layers of lacquer are enriched with selected thinning means.

3. Method according to Claim 1 or 2, characterised in that as the adhesive sheet (10, 16) there is employed a material which is extensible and is resistant to the thinning means.

4. Method according to any one of Claims 1 to 3, characterised in that the optical fibres (17) are laid on an adhesive-sheet strip (16) in the form of a meander with loops projecting beyond the edges of the adhesive-sheet strip.

5. Method according to any one of Claims 1 to 3, characterised in that the optical fibres (17) are laid on the adhesive sheet (10) with the assistance of a mould (35, 36), and that, after the laying of the optical fibres, the mould provided with a non-stick layer is easily detached from the adhesive sheet (10).

6. Method according to any one of the preceding claims, characterised in that for laying the optical fibres (17) on the adhesive sheet (10) there is employed a guide head, which, in the manner of an XY recorder in dependence on a microprocessor control, distributes the optical fibres (17) in a desired predetermined configuration.

**Revendications**

1°) Procédé pour réaliser un dispositif de mesure pour constater des fissures sur des échantillons comportant un détecteur de fissures prévu sur l'échantillon et servant à déclencher un moyen indicateur de fissures, détecteur qui se compose de fibres optiques alimentées en lumière et collées sur l'échantillon, caractérisé en ce que les fibres optiques (17) sont réparties sur la face collante d'une feuille collante (10, 16) perforée dans sa surface et après collage de la feuille collante sur l'échantillon aux endroits dégagés par les perforations, on prévoit un revêtement d'une première couche de vernis et en ce que les fibres optiques (17) qui collent sur l'ébauche, après durcissement de la couche de vernis et après enlèvement de la feuille collante (10, 16) sont revêtues d'une seconde ou de plusieurs autres couches de vernis.

2°) Procédé selon la revendication 1, caractérisé en ce que les couches de vernis sont un vernis de zinc et de chrome et en ce qu'on ajoute à ce vernis un agent diluant, de façon définie, pour l'application de la couche (projection).

3°) Procédé selon la revendication 1 ou 2, caractérisé en ce que pour la couche collante (10, 16), on utilise un tissu extensible et qui résiste aux solvants.

4°) Procédé selon l'une des revendications 1 à 3, caractérisé en ce que les fibres optiques (17) sont disposées sur une bande collante (16) en forme de méandres, formant des boucles qui dépassent par rapport aux bords de la feuille collante.

5°) Procédé selon les revendications 1 à 3, caractérisé en ce que les fibres optiques (17) sont disposées sur la feuille collande (10) après mise en place des fibres optiques.

6°) Procédé selon l'une des revendications précédentes, caractérisé en ce que l'on utilise une tête de guidage pour la mise en place des fibres optiques (17) sur la feuille collante (10), tête qui dépose les fibres optiques (17) suivant n'importe quelle forme prédéterminée, à la manière d'une table traçante en X et en V, suivant la commande d'un microprocesseur.

FIG. 1

FIG. 2a

FIG. 2

FIG. 3

FIG. 4a          FIG. 4b